# EUROPÄISCHE PATENTANMELDUNG

(11) **EP 4 544 896 A1**
(43) Veröffentlichungstag der Anmeldung: **30.04.2025**
(21) Anmeldenummer: 24401021.1
(22) Anmeldetag: 23.08.2024
(51) Int. Cl.: A01C 7/20, A01C 7/06, A01C 15/00

(54) **FRONTANBAU ZUM VERBINDEN MIT EINEM FRONTANSCHLUSS EINER ZUGMASCHINE SOWIE MASCHINENSYSTEM MIT EINEM FRONTANBAU**

(30) Priorität: 24.10.2023 DE 102023129137
(71) Anmelder: Amazonen-Werke H. Dreyer SE & Co. KG, 49205 Hasbergen (DE)
(72) Erfinder: Freese, Sebastian, 49205 Hasbergen (DE)

(57) **Zusammenfassung**

Die Erfindung betrifft einen Frontanbau (1) zum Verbinden mit einem Frontanschluss (51) einer Zugmaschine (50) aufweisend:
- eine Sävorrichtung (2) zur Säfurchenerzeugung mit wenigstens einen Tragarm (3) zum Tragen und Führen eines Bodenbearbeitungswerkzeugs (4).

Ferner betrifft die Erfindung ein Maschinensystem (100) zum Einbringen von Saatgut und/oder Dünger in einen Ackerboden aufweisend:
- einen Frontanbau (1) zum Verbinden mit einem Frontanschluss (51) einer Zugmaschine (50),
- wobei der Frontanbau (1) eine Sävorrichtung (2) zur Säfurchenerzeugung aufweist.

## Beschreibung

Die Erfindung betrifft einen Frontanbau zum Verbinden mit einem Frontanschluss einer Zugmaschine sowie ein Maschinensystem zum Einbringen von Saatgut und/oder Dünger in einen Ackerboden.

Bei der Ablage von Saatgut und/oder Dünger in einen Ackerboden kommen Sämaschinen zum Einsatz, die am Heck oder an einem Heckanbau einer Zugmaschine befestigt sind.

Dabei kann es z. B. in Abhängigkeit der Bodenverhältnisse ratsam sein, einen Behälter für Saatgut und/oder Dünger, welcher an der Sämaschine angebracht ist, mit einem geringen Volumen zu wählen, um das zu tragende / zu ziehende Gewicht für die Zugmaschine zu reduzieren. Jedoch verringert dies die Leistungsfähigkeit der Sämaschine, da diese nun öfter mit Saatgut und/oder Dünger befüllt werden muss, um großflächige Acker zu bestellen.

In diesem Zusammenhang ist es bekannt, einen zusätzlichen Behälter für Saatgut und/oder Dünger an der Front bzw. an einem Frontanbau der Zugmaschine zu befestigen. Um nun das Saatgut und/oder den Dünger von der Zugmaschinenfront hin zum Zugmaschinenheck zu fördern, bedarf es langer Leitungen sowie eines ausreichend starken Fördergebläses.

Jedoch ist die Installation eines derartigen Frontanbaus zum einen mit hohen Rüstzeiten verbunden, da die Leitungen für Saatgut und/oder Dünger per Hand verlegt und an das Fördergebläse im Frontanbau sowie an den Heckanbau angeschlossen werden müssen. Zum anderen bedingt die Verwendung eines derartigen Frontanbaus einen erhöhten Kraftstoffverbrauch, eben z. B. für das Fördergebläse.

Vor diesem Hintergrund ist es daher Aufgabe der vorliegenden Erfindung, einen Frontanbau zum Verbinden mit einem Frontanschluss einer Zugmaschine sowie ein Maschinensystem zum Einbringen von Saatgut und/oder Dünger in einen Ackerboden anzugeben, welcher bzw. welches einen geringen Kraftstoffverbrauch aufweist und/oder geringe Rüstzeiten für den An- und Abbau an einer Zugmaschine gewährleistet.

Diese Aufgabe wird durch die Merkmale der unabhängigen Patentansprüche gelöst. Weitere vorteilhafte Weiterbildungen sind Gegenstand der Unteransprüche.

Ein erster Aspekt der vorliegenden Erfindung umfasst einen Frontanbau zum Verbinden mit einem Frontanschluss einer Zugmaschine.

Der Frontanbau weist eine Sävorrichtung zur Säfurchenerzeugung mit wenigstens einen Tragarm zum Tragen und Führen eines Bodenbearbeitungswerkzeugs auf. Dadurch ist es nun möglich, bereits in Fahrtrichtung vor der Zugmaschine eine Säfurche zu erzeugen, in welche Saatgut und/oder Dünger ablegbar ist. Auf diese Weise kann z. B. bei einem Maschinensystem mit einem Frontanbau und einem Heckanbau an einer Zugmaschine ein Behälter für Saatgut und/oder Dünger am Heck bzw. am Heckanbau geringer dimensioniert werden oder gar entfallen, wodurch eine verbesserte/gleichmäßigere Ballastierung des Maschinensystems erreichbar ist. Auch können durch so einen Aufbau Achslasten der Zugmaschine reduziert bzw. besser verteilt werden. Somit sind von dem Frontanbau für die Ausbringung von Dünger und/oder Saatgut kurze Förderwege realisierbar. Ferner entfällt eine komplizierte Montage von Förderleitungen oder Verteilleitungen zur Führung von Saatgut und/oder Dünger zum Heck einer Zugmaschine. Somit können geringe Rüstzeiten für den An- und Abbau an einer Zugmaschine gewährleistet werden.

Außerdem kann die Sävorrichtung für den wenigstens einen Tragarm ein Bodenbearbeitungswerkzeug zur Säfurchenerzeugung aufweisen, welches an dem wenigstens einen Tragarm austauschbar befestigbar sein kann.

Das Bodenbearbeitungswerkzeug kann ein Meißelschar oder ein Scharmeißel oder ein Standardmeißel oder ein Zinkenmeißel oder ein Einscheibenschar oder ein Doppelscheibenschar sein, mit welchem eine Säfurche in einem Ackerboden erzeugbar ist.

Dadurch, dass das Bodenbearbeitungswerkzeug austauschbar befestigbar sein kann, kann ein verschlissenes Bodenbearbeitungswerkzeug ersetzt oder ein für den Ackerboden anderes Bodenbearbeitungswerkzeug verwendet werden.

Ferner können wenigstens zehn Tragarme in Reihe nebeneinander und quer zur Arbeitsrichtung der Sävorrichtung oder des Frontanbaus angeordnet sein. Somit kann eine Arbeitsbreite geschaffen werden, entlang welcher Saatgut und/oder Dünger ablegbar ist und/oder Säfurchen erzeugbar sind.

Zudem kann der Abstand zwischen zwei benachbarten Tragarmen zwischen 100 bis 300 mm stufenlos oder in vorgegebenen Positionen bzw. Abständen einstellbar sein. Somit kann auf den Abstand zwischen Saatgut und Dünger und zwischen Saatgut und Saatgut oder zwischen Dünger und Dünger in verschiedenen Anwendungsfällen eingegangen werden.

Des Weiteren kann die Sävorrichtung wenigstens eine Ausbringleitung für Saatgut und/oder Dünger aufweisen.

Dabei kann in Arbeitsrichtung der Sävorrichtung der wenigstens eine Tragarm vor der wenigstens einen Ausbringleitung angeordnet sein, sodass eine Ausbringleitung einem Tragarm nachläuft, um Saatgut und/oder Dünger in eine erstellte Säfurche und somit in einen Ackerboden einzubringen.

Auch kann die wenigstens eine Ausbringleitung in Arbeitsrichtung der Sävorrichtung, z. B. unmittelbar, hinter dem wenigstens einen Tragarm angeordnet sein. Somit kann eine sichere Ablage von Dünger und/oder Saatgut innerhalb einer Säfurche gewährleistet werden.

Ferner ist es möglich, dass die Sävorrichtung eine Halteeinrichtung für den wenigstens einen Tragarm umfasst, an welcher der wenigstens eine Tragarm zum Tragen und Führen eines Bodenbearbeitungswerkzeugs befestigbar sein kann. Auch kann die Sävorrichtung zwei oder mehr Halteeinrichtungen für den wenigstens einen Tragarm umfassen, an welchen jeweils wenigstens ein Tragarm zum Tragen und Führen eines Bodenbearbeitungswerkzeugs befestigbar sein kann. Folglich können z. B. mehrere Tragarme mithilfe der Halteeinrichtung miteinander verbunden werden, wodurch die Handhabung erleichtert wird.

Die Halteeinrichtung kann ein Rohr, z. B. ein Vierkantrohr oder ein Scharrohr, aufweisen.

Außerdem kann die Halteeinrichtung wenigstens ein Stützrahmenteil aufweisen, wobei ein Stützrahmenteil oder zwei, z. B. zwei äußere oder außenliegende, Stützrahmenteile zum Anschluss für je einen Lenker wenigstens einer Tiefenführungseinrichtung der Sävorrichtung und/oder zur räumlichen Führung dienen können. Dabei kann der wenigstens eine Stützrahmenteil drehfest mit der Halteeinrichtung oder mit einem Rohr der Halteeinrichtung verbunden sein. Auch kann der wenigstens eine Stützrahmenteil von einem dreiecksförmigen Blech gebildet werden. Mithilfe eines Stützrahmenteils kann die Drehung bzw. Rotation eines Rohrs der Halteeinrichtung im Zusammenspiel mit einem Lenker wenigstens einer Tiefenführungseinrichtung der Sävorrichtung begrenzt werden. Somit kann also die räumliche Position der Halteeinrichtung bestimmt geführt werden.

Des Weiteren kann die Sävorrichtung eine Hubeinrichtung aufweisen, mit welcher der wenigstens eine Tragarm zum Tragen und Führen eines Bodenbearbeitungswerkzeugs von einer Transportstellung in eine Arbeitsstellung und umgekehrt überführbar sein kann und/oder mit welcher eine Tiefenführungseinrichtung zur Tiefenführung von wenigstens einem Bodenbearbeitungswerkzeug in einem Ackerboden und/oder als Teil eines Überlastungsschutzes wenigstens eines Bodenbearbeitungswerkzeugs vor Unebenheiten einer Ackeroberfläche von einer Transportstellung in eine Arbeitsstellung und umgekehrt überführbar sein kann. Dabei kann die Hubeinrichtung dazu eingesetzt werden - wenn der Frontanbau an einer Zugmaschine befestigt ist - die Sävorrichtung des Frontanbaus oder den wenigstens eine Tragarm relativ zur Zugmaschine derart abzulassen, dass ein oder mehrere Bodenbearbeitungswerkzeuge in einen Ackerboden eingreifen. Auch ist es mithilfe der Hubeinrichtung möglich, die Sävorrichtung des Frontanbaus relativ zur Zugmaschine derart hochzuheben, dass ein oder mehrere Bodenbearbeitungswerkzeuge von einem Ackerboden beabstandet werden.

Ferner kann die Hubeinrichtung wenigstens einen Aktor aufweisen, mit welchem eine Halteeinrichtung der Sävorrichtung oder der wenigstens einen Tragarm durch ein Ein- und Ausfahren eines Stellgliedes des wenigstens einen Aktors von einer Transportstellung in eine Arbeitsstellung und umgekehrt überführbar ist. Mit anderen Worten ausgedrückt, kann der wenigstens eine Aktor dazu verwendet werden - wenn der Frontanbau an einer Zugmaschine befestigt ist - die Sävorrichtung des Frontanbaus oder gar den Frontanbau relativ zur Zugmaschine abzulassen oder hochzuheben. Auch kann der wenigstens eine Aktor dazu dienen, den Schardruck bzw. den Druck auf ein oder mehrere Bodenbearbeitungswerkzeuge einzustellen.

Dabei kann die Sävorrichtung oder der Frontanbau in der Transportstellung der Hubeinrichtung auf einer Straße bewegbar sein, sodass eine Säfurchenerzeugung unterbindbar bzw. nicht möglich ist. Anders ausgedrückt, kann in Anbringung der Sävorrichtung an einer Zugmaschine in der Transportstellung der Hubeinrichtung wenigstens ein Bodenbearbeitungswerkzeug von der Erdoberfläche beabstandbar sein.

Auch kann die Sävorrichtung oder der Frontanbau in der Arbeitsstellung der Hubeinrichtung zur Säfurchenerzeugung einsetzbar sein. Ebenfalls mit anderen Worten formuliert, kann in Anbringung der Sävorrichtung an einer Zugmaschine in der Arbeitsstellung der Hubeinrichtung wenigstens ein Bodenbearbeitungswerkzeug in einem Ackerboden platzierbar sein.

Dabei kann der wenigstens eine Aktor als Pneumatik- oder als Hydraulikzylinder ausgebildet sein. Auch kann der wenigstens eine Aktor als doppelwirkender Zylinder ausgebildet sein. Somit kann mit dem wenigstens einen Aktor eine Arbeits- als auch eine Transportstellung der Hubeinrichtung realisiert werden.

Ferner kann der wenigstens eine Aktor und/oder die Hubeinrichtung eine Rahmeneinrichtung der Sävorrichtung mit einer Halteeinrichtung der Sävorrichtung beweglich verbinden. Die Rahmeneinrichtung kann zur Befestigung der Sävorrichtung an einer Zugmaschine dienen, wobei mittels des wenigstens einen Aktors und/oder mittels der Hubeinrichtung ein Ablassen und/oder Hochheben eines oder mehrerer Bodenbearbeitungswerkzeuge oder des wenigstens einen Tragarms möglich ist.

Auch kann die Hubeinrichtung einen Halterahmen mit wenigstens einem Aktorteil und mit einem Halteteil aufweisen.

Der wenigstens eine Aktorteil kann an seinem ersten Ende drehbeweglich an einer Rahmeneinrichtung der Sävorrichtung angeordnet sein. Ferner kann der wenigstens eine Aktorteil an seinem zweiten Ende an einem Aktor der Hubeinrichtung, z. B. drehbeweglich, angeordnet sein. Zudem kann der wenigstens eine Aktorteil als Kragarm ausgebildet sein. Das zweite Ende kann freikragend ausgebildet sein. Ferner kann der Halteteil starr am wenigstens einen Aktorteil, z. B. zwischen einem ersten und zweiten Ende des Aktorteils, befestigt sein. Somit kann das wenigstens eine Aktorteil zusammen mit dem Halteteil als Einheit bewegt werden.

Ferner kann der Halteteil U-förmig ausgebildet sein. Die freien Enden der gleichorientierten Schenkel des Halteteils können zur Verbindung mit einer Halteeinrichtung der Sävorrichtung ausgebildet sein. Somit kann also an den freien Enden eine Halteeinrichtung angebracht werden, an welcher der wenigstens eine Tragarm befestigt sein kann. Der Schenkel der U-förmigen Ausbildung, der die beiden gleichorientierten Schenkel verbindet, kann mit dem wenigstens einen Aktorteil drehfest verbunden sein.

Die Hubeinrichtung kann einen Halterahmen mit wenigstens einem Drehlager aufweisen, mit welchem eine Halteeinrichtung der Sävorrichtung drehbar an einem Halterahmen der Hubeinrichtung anordenbar sein kann. Das wenigstens eine Drehlager kann an einem Halteteil der Halteeinrichtung angeordnet sein. Auch können zwei Drehlager an jeweils einem freien Ende eines gleichorientierten Schenkels des U-förmig ausgebildeten Halteteils angeordnet sein.

Zudem kann die Hubeinrichtung einen Parallellenker aufweisen, mit welchem die Bewegung oder Drehbewegung einer Halteeinrichtung der Sävorrichtung, z. B. über ein Drehlager, relativ zum Halterahmen vorbestimmbar oder festlegbar oder begrenzbar sein kann. Der Parallellenker kann mit seinem ersten Ende drehbeweglich an einer Rahmeneinrichtung der Sävorrichtung angeordnet sein. Ferner kann der Parallellenker mit seinem zweiten Ende drehbeweglich an einem Stützrahmenteil einer Halteeinrichtung der Sävorrichtung angeordnet sein. Somit kann der Parallellenker zwei Bauteile, z. B. drehbeweglich, über eine Distanz miteinander verbinden.

Des Weiteren kann die Sävorrichtung wenigstens eine Tiefenführungseinrichtung zur Tiefenführung wenigstens eines Bodenbearbeitungswerkzeugs in einem Ackerboden und/oder als Teil eines Überlastungsschutzes wenigstens eines Bodenbearbeitungswerkzeugs vor Unebenheiten einer Ackeroberfläche umfassen.

Die wenigstens eine Tiefenführungseinrichtung kann wenigstens ein Stützrad zum Abstützen der Sävorrichtung auf einer Ackerbodenoberfläche oder auf einem Ackerboden aufweisen. Mithilfe des wenigstens einen Stützrades ist z. B. die Arbeitstiefe eines Bodenbearbeitungswerkzeugs in einem Ackerboden festlegbar. Das wenigstens eine Stützrad kann drehbar um seine Drehachse ausgebildet sein.

Ferner kann das wenigstens eine Stützrad drehbar an einer Halteeinrichtung der Sävorrichtung angeordnet sein, wodurch die relative Position wenigstens eines Bodenbearbeitungswerkzeugs zum wenigstens einen Stützrad einstellbar ist und/oder wodurch wenigstens ein Bodenbearbeitungswerkzeug in einer bestimmbaren Bearbeitungstiefe in einem Ackerboden führbar und/oder wodurch die Bearbeitungstiefe wenigstens eines Bodenbearbeitungswerkzeugs in einem Ackerboden einstellbar ist.

Ferner kann die wenigstens eine Tiefenführungseinrichtung einen Führ- und Halterahmen zur Führung eines Stützrades der Tiefenführungseinrichtung umfassen. Der Führ- und Halterahmen kann drehbar an einer Halteeinrichtung der Sävorrichtung angeordnet sein, wodurch die relative Position wenigstens eines Bodenbearbeitungswerkzeugs zu einem Stützrad der Tiefenführungseinrichtung einstellbar ist und/oder wodurch die Bearbeitungstiefe wenigstens eines Bodenbearbeitungswerkzeugs in einem Ackerboden einstellbar ist und/oder wodurch wenigstens ein Bodenbearbeitungswerkzeug in einer bestimmbaren Bearbeitungstiefe in einem Ackerboden führbar ist.

Des Weiteren kann die wenigstens eine Tiefenführungseinrichtung einen Lenker umfassen. Der Lenker kann verstellbar ausgebildet sein, sodass mit diesem die relative Lage eines Führ- und Halterahmens der wenigstens einen Tiefenführungseinrichtung zu einer Halteeinrichtung der Sävorrichtung veränderbar und/oder einstellbar ist. Dadurch kann zudem die Bearbeitungstiefe wenigstens eines Bodenbearbeitungswerkzeugs in einem Ackerboden einstellbar sein und/oder wenigstens ein Bodenbearbeitungswerkzeug in einer bestimmbaren Bearbeitungstiefe in einem Ackerboden führbar sein und/oder die relative Position wenigstens eines Bodenbearbeitungswerkzeugs zu einem Stützrad der Tiefenführungseinrichtung einstellbar sein.

Auch kann der Lenker an einem Stützrahmenteil einer Halteinrichtung der Sävorrichtung und an einem Führ- und Halterahmen der wenigstens einen Tiefenführungseinrichtung angeordnet sein, sodass der Führ- und Halterahmen relativ um die Halteeinrichtung verstellbar ist. Dadurch kann die Bearbeitungstiefe wenigstens eines Bodenbearbeitungswerkzeugs in einem Ackerboden einstellbar sein.

Zusammenfassend kann festgehalten werden, dass die wenigstens eine Tiefenführungseinrichtung in einem Überlastfall, in welchem z. B. die Sävorrichtung zur Säfurchenerzeugung gegen einen großen Widerstand bewegt wird, der wenigstens eine Tragarm zum Tragen und Führen eines Bodenbearbeitungswerkzeugs vor Beschädigung bewahrbar ist. Dabei kann der Widerstand z. B. von einem großen Stein oder von Bodenunebenheiten hervorgerufen werden. In diesem Zusammenhang kann die wenigstens eine Tiefenführungseinrichtung so ausgebildet sein, dass in diesem Überlastfall ein Stützrad der Tiefenführungseinrichtung eine Kraft von dem zu überwindenden Hindernis erfährt. Diese einwirkende Kraft kann die wenigstens eine Tiefenführungseinrichtung an wenigstens einen Aktor einer Hubeinrichtung der Sävorrichtung weiterleiten. Aufgrund der Ausgestaltung des wenigstens einen Aktors kann der wenigstens eine Tragarm zum Tragen und Führen eines Bodenbearbeitungswerkzeugs kurzzeitig von der Arbeitsstellung in die Transportstellung überführt werden. Somit beabstandet die wenigstens eine Tiefenführungseinrichtung im Überlastfall den wenigstens einen Tragarm zum Tragen und Führen eines Bodenbearbeitungswerkzeugs von einem Ackerboden, um Schäden an dem wenigstens einen Tragarm zu vermeiden. Nachdem das Hindernis überwunden ist, kann der wenigstens eine Aktor den wenigstens einen Tragarm zum Tragen und Führen eines Bodenbearbeitungswerkzeugs bzw. eine Halteeinrichtung der Sävorrichtung von der Transportstellung in die Arbeitsstellung überführen bzw. zurückführen.

Des Weiteren kann die Sävorrichtung eine Rahmeneinrichtung zum Tragen weiterer Einrichtungen und/oder zur Anordnung an einem Frontanschluss einer Zugmaschine und/oder zur Anordnung an einer Behältervorrichtung für Saatgut und/oder Dünger aufweisen. Die Rahmeneinrichtung kann von Blechen gebildet werden.

Dabei kann die Rahmeneinrichtung wenigstens ein erstes Drehgelenk aufweisen, mit welchem ein Aktorteil eines Halterahmens einer Hubeinrichtung der Sävorrichtung drehbeweglich lagerbar ist.

Auch kann die Rahmeneinrichtung wenigstens ein zweites Drehgelenk aufweisen, mit welchem ein Aktor einer Hubeinrichtung der Sävorrichtung drehbeweglich lagerbar ist.

Zudem kann die Rahmeneinrichtung wenigstens ein drittes Drehgelenk aufweisen, mit welchem ein Parallellenker einer Hubeinrichtung der Sävorrichtung drehbeweglich lagerbar ist.

Das wenigstens eine zweite und dritte Drehgelenk kann als ein einziges bzw. gemeinsames Drehgelenk realisierbar sein.

Ferner kann das wenigstens eine erste, zweite und/oder dritte Drehgelenk einen Bolzen als Drehachse aufweisen. Dies ist eine einfache und kostengünstige Lösung. Der Bolzen oder das wenigstens eine erste, zweite und/oder dritte Drehgelenk kann die Rahmeneinrichtung und den Aktorteil, und/oder den Aktor, und/oder den Parallellenker drehbeweglich miteinander verbinden.

Außerdem kann die Sävorrichtung einen Drehsensor aufweisen. Der Drehsensor kann an einem ersten Drehgelenk der Rahmeneinrichtung angeordnet sein, um die Lageposition zwischen einem Aktorteil eines Halterahmens einer Hubeinrichtung der Sävorrichtung und der Rahmeneinrichtung zu erfassen.

Des Weiteren kann die Rahmeneinrichtung eine Aufnahme für eine Behältervorrichtung für Saatgut und/oder Dünger aufweisen. Die Rahmeneinrichtung kann auch einen Aufnahmeanschluss zum Anschluss an einen Frontanschluss einer Zugmaschine aufweisen.

Ferner kann die Rahmeneinrichtung einen Anschluss für eine Verteileinrichtung zum Verteilen von Saatgut und/oder Dünger auf mehrere Verteilleitungen der Sävorrichtung aufweisen.

Außerdem kann vorgesehen sein, dass die Sävorrichtung eine Verteileinrichtung mit einem Verteilerkopf aufweist. Der Verteilerkopf kann mit Druckluft gefördertes Saatgut und/oder Dünger aus einer Behältervorrichtung für Saatgut und/oder Dünger auf mehrere Verteilleitungen der Sävorrichtung gleichmäßig verteilen.

Außerdem kann die Sävorrichtung wenigstens eine Verteilleitung aufweisen, mit welchem Saatgut und/oder Dünger von einer Verteileinrichtung zum Verteilen von Saatgut und/oder Dünger der Sävorrichtung hin zu wenigstens einer Ausbringleitung der Sävorrichtung förderbar und/oder leitbar ist. Dabei kann ein erstes Ende der wenigstens einen Verteilleitung an einer Verteileinrichtung der Sävorrichtung angeordnet sein. Ein zweites Ende der wenigstens einen Verteilleitung kann an einer Ausbringleitung der Sävorrichtung angeordnet sein. Somit ist also jede Verteilleitung in der Lage, Dünger und/oder Saatgut von einem Ende der Verteilleitung zum anderen Ende zu leiten. Durch die Ausgestaltung des Frontanbaus mit einer Sävorrichtung kann die wenigstens eine Verteilleitung möglichst kurzgehalten werden, wodurch z. B. Kraftstoff für ein Fördergebläse einsparbar ist.

Des Weiteren kann der Frontanbau eine Behältervorrichtung für Saatgut und/oder Dünger aufweisen. Dabei kann die Behältervorrichtung einen Speicher zum Transport von Saatgut und/oder Dünger aufweisen. Auch kann die Behältervorrichtung an einem Aufnahmeanschluss einer Rahmeneinrichtung der Sävorrichtung angeordnet sein. Dabei kann die Behältervorrichtung einen Rahmen aufweisen, von welchem der Speicher gestützt wird.

Ein zweiter Aspekt der vorliegenden Erfindung umfasst ein Maschinensystem zum Einbringen von Saatgut und/oder Dünger in einen Ackerboden.

Es wird ausdrücklich darauf hingewiesen, dass die Merkmale des Frontanbaus, wie sie unter dem ersten Aspekt erwähnt werden, einzeln oder miteinander kombinierbar bei dem Maschinensystem Anwendung finden können.

Anders ausgedrückt, die oben unter dem ersten Aspekt der Erfindung genannten Merkmale betreffend den Frontanbau können auch hier unter dem zweiten Aspekt der Erfindung mit weiteren Merkmalen kombiniert werden.

Ein Maschinensystem zum Einbringen von Saatgut und/oder Dünger in einen Ackerboden umfasst einen Frontanbau zum Verbinden mit einem Frontanschluss einer Zugmaschine. Der Frontanbau weist eine Sävorrichtung zur Säfurchenerzeugung auf. Dadurch ist es nun möglich, bereits in Fahrtrichtung vor einer Zugmaschine eine Säfurche in einem Ackerboden zu erzeugen, in welche Saatgut und/oder Dünger ablegbar ist. Auf diese Weise kann auch bei einem Maschinensystem mit einem Frontanbau und einem Heckanbau an einer Zugmaschine ein Behälter für Saatgut und/oder Dünger am Heck bzw. am Heckanbau geringer dimensioniert werden oder gar entfallen, wodurch eine verbesserte/gleichmäßigere Ballastierung des Maschinensystems erreichbar ist. Auch können durch so einen Aufbau Achslasten der Zugmaschine reduziert bzw. besser verteilt werden.

Dabei kann der Frontanbau ein Frontanbau nach dem ersten Aspekt sein.

Des Weiteren weist das Maschinensystem eine Zugmaschine mit einem Frontanschluss und/oder einem Heckanschluss auf. Dabei kann der Frontanbau am Frontanschluss angeordnet sein.

Auch kann das Maschinensystem einen Heckanbau zum Verbinden mit einem Heckanschluss einer Zugmaschine umfassen. Der Heckanbau kann dabei am Heckanschluss angeordnet sein.

Ferner kann der Heckanbau eine Sävorrichtung zur Säfurchenerzeugung aufweisen.

Die Sävorrichtung des Heckanbaus und die Sävorrichtung des Frontanbaus können in Arbeitsrichtung der Sävorrichtungen oder des Maschinensystems hintereinander angeordnet sein, sodass die Sävorrichtung des Heckanbaus der erstellten Säfurche der Sävorrichtung des Frontaufbaus folgt. Somit kann z. B. vom Frontanbau Saatgut und vom Heckanbau Dünger in derselben Säfurche abgelegt werden. Umgekehrt ist der Vorgang ebenfalls vorstellbar. Es ist aber auch denkbar, dass sowohl vom Frontanbau als auch vom Heckanbau Saatgut und/oder Dünger in derselben oder unterschiedlichen Säfurche abgelegt wird.

Auch ist es möglich, dass die Sävorrichtung des Heckanbaus und die Sävorrichtung des Frontanbaus quer zur Arbeitsrichtung der Sävorrichtungen oder des Maschinensystems versetzt nebeneinander angeordnet sind, sodass die Sävorrichtung des Heckanbaus versetzt zur erstellten Säfurche der Sävorrichtung des Frontaufbaus auf dem Ackerboden anordenbar ist. Somit kann z. B. vom Frontanbau Saatgut und vom Heckanbau Dünger in zueinander benachbarten Säfurchen abgelegt werden. Umgekehrt ist der Vorgang ebenfalls vorstellbar. Es ist auch denkbar, dass sowohl vom Frontanbau als auch vom Heckanbau Saatgut und/oder Dünger abgelegt wird.

Des Weiteren kann die Sävorrichtung des Frontanbaus ausgebildet sein, wenigstens eine Säfurche in einer ersten Tiefe in einem Ackerboden zu erzeugen.

Zudem kann die Sävorrichtung des Heckanbaus ausgebildet sein, wenigstens eine Säfurche in einer zweiten Tiefe in einem Ackerboden zu erzeugen.

Dabei können die erste und zweite Tiefe gleich sein oder die erste Tiefe kann geringer sein als die zweite Tiefe oder die zweite Tiefe kann geringer sein als die erste Tiefe. Folglich sind für Dünger und/oder Saatgut unterschiedliche Ablagetiefen in einem Ackerboden realisierbar.

Ferner kann die Sävorrichtung des Front- und/oder Heckanbaus höhenverstellbar sein, um unterschiedliche Tiefen für Säfurchen zu erzeugen.

Nachfolgend wird der oben dargestellte Erfindungsgedanke nochmals und ergänzend mit anderen Worten ausgedrückt.

Dieser Gedanke betrifft - vereinfacht dargestellt - eine Fronttankmaschine bzw. einen Frontanbau an einer Zugmaschine mit einem hydraulisch belastbaren Hubwerk / mit einer Hubeinrichtung zur Aufnahme von Bodenbearbeitungswerkzeugen zur Aussaat von Dünger und/oder anderen Saatgütern. Somit sind durch Ausbringung von Dünger und/oder Saatgut in der Front kurze Förderwege realisierbar und eine komplizierte Montage von Förderleitung oder Verteilleitungen an einer Zugmaschine kann entfallen.

Dabei kann der Frontanbau, Bodenbearbeitungselemente (z. B. Scheiben, Zinken) bzw. Bodenbearbeitungswerkzeuge sowie eine Saatgutablage bzw. eine Ausbringleitung aufweisen. Die Vorteile sind kurze Förderstrecken von einem Fronttank bzw. von einer Behältervorrichtung zu den Werkzeugen / Bodenbearbeitungswerkzeugen. Auch kann eine Düngerablage erreicht werden, beispielsweise tiefer als eine Saatgutablage.

Ferner können Bodenbearbeitungswerkzeuge des Frontanbaus seitlich zu Bodenbearbeitungswerkzeugen im Heck bzw. eines Heckanbaus für eine Zugmaschine versetzt sein, sodass sich zwei "Heck-Reihen" eine Düngerreihe oder -portion teilen. Der Düngerbehälter bzw. die Behältervorrichtung im Heck / des Heckanbaus kann somit entfallen, wodurch eine verbesserte/gleichmäßigere Ballastierung des Gespanns oder des Maschinensystems mit Front- und Heckanbau erreichbar ist. Ferner können Achslasten der Zugmaschine, z. B. auf der Hinterachse, reduziert werden.

Zudem können Rüstzeiten verkürzt werden, weil keine aufwändige Leitungsführung vom Frontanbau zum Heckanbau erfolgen muss.

Des Weiteren ist eine Tiefeneinstellung von Dünger und/oder Saatgut über eine Tiefenführungseinrichtung zur Tiefenführung wenigstens eines Bodenbearbeitungswerkzeugs in einem Ackerboden und als Überlastungsschutz wenigstens eines Bodenbearbeitungswerkzeugs vor Unebenheiten einer Ackeroberfläche einfach möglich, z. B. auch in Abstimmung auf Bodenbearbeitungswerkzeuge am Heckanbau. Zudem kann eine aufwändige Kinematik an der Heckmaschine bzw. am Heckanbau entfallen.

Nachstehend wird die Erfindung anhand eines Ausführungsbeispiels in Verbindung mit zugehörigen Zeichnungen näher erläutert. Hierbei zeigen schematisch:
- Fig. 1: eine räumliche Ansicht auf eine Sämaschine eines Frontanbaus aus einer ersten Perspektive;
- Fig. 2: eine räumliche Ansicht auf die Sämaschine aus Figur 1 aus einer zweiten Perspektive;
- Fig. 3a bis 3c: eine seitliche Ansicht der Sämaschine aus Figuren 1 und 2 mit Schwerpunkt auf eine Hubeinrichtung;
- Fig. 4a und 4b: eine räumliche Ansicht der Sämaschine aus Figuren 3b und 3c;
- Fig. 5a und 5b: eine seitliche Ansicht der Sämaschine aus Figuren 1 und 2 mit Schwerpunkt auf eine Hubeinrichtung sowie auf eine Tiefenführungseinrichtung;
- Fig. 6: eine räumliche Ansicht der Sämaschine aus Figuren 1 und 2 mit einem vergrößerten Bereich;
- Fig. 7: eine räumliche Ansicht auf eine Tiefenführungseinrichtung aus Figur 6;
- Fig. 8a bis 8c: räumliche Ansichten auf einen Frontanbau mit der Sämaschine aus den vorangehenden Figuren und mit einer Behältervorrichtung; und
- Fig. 9a bis 9b: seitliche Ansichten auf einen Frontanbau, angebracht an einer Zugmaschine 50, in unterschiedlichen Zuständen.

In der nachfolgenden Beschreibung werden gleiche Bezugszeichen für gleiche Gegenstände verwendet.

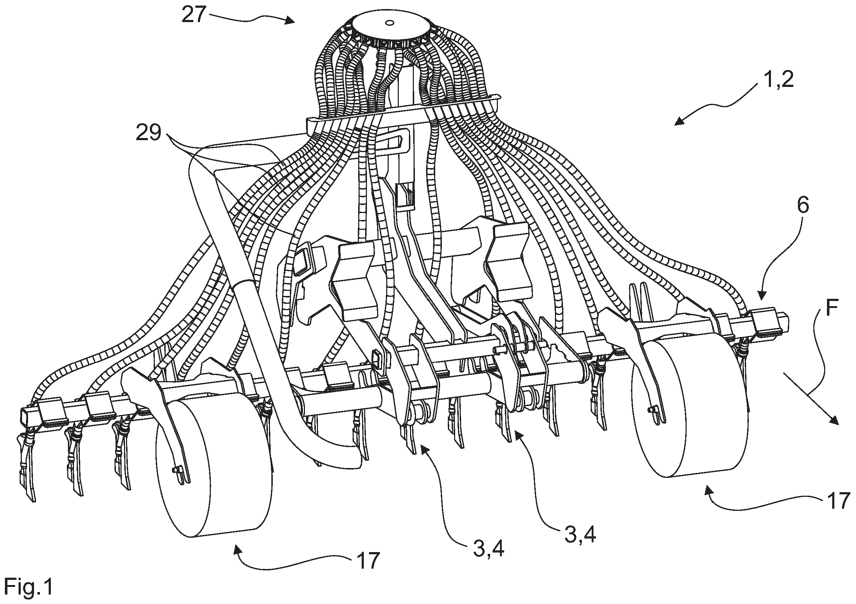

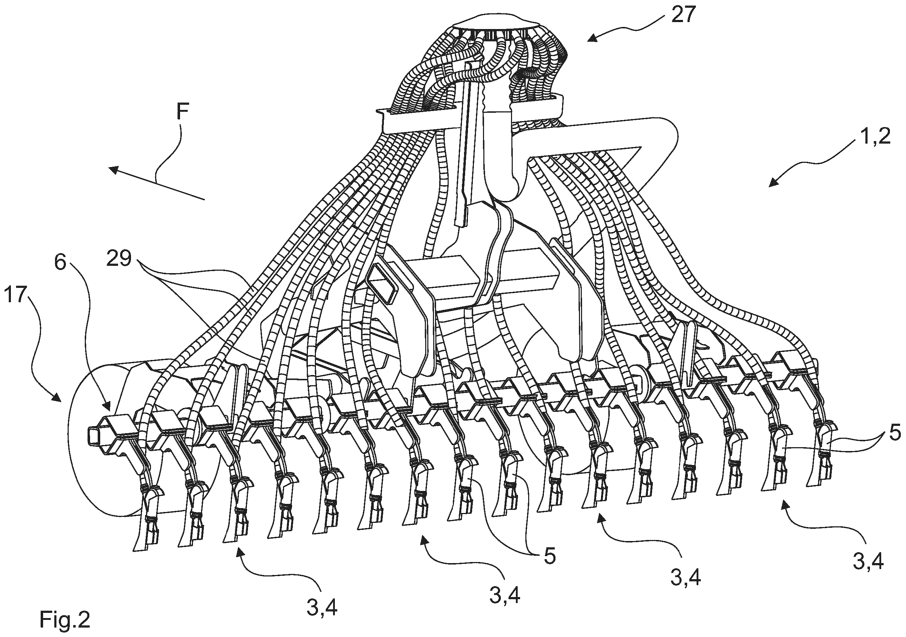

Figur 1 zeigt eine räumliche Ansicht auf eine Sämaschine 2 eines Frontanbaus 1 aus einer ersten Perspektive, demgegenüber zeigt Figur 2 eine räumliche Ansicht auf die Sämaschine 2 aus Figur 1 aus einer zweiten Perspektive.

Der Einfachheit und Kürze halber werden nachstehend die Figuren 1 und 2 gemeinsam beschrieben.

So zeigen genannte Figuren einen Frontanbau 1 zum Verbinden mit einem Frontanschluss 51 (nicht dargestellt) einer Zugmaschine 50. Dabei hat der Frontanbau 1 eine Sävorrichtung 2 zur Säfurchenerzeugung mit mehreren Tragarmen 3 jeweils zum Tragen und Führen eines Bodenbearbeitungswerkzeugs 4.

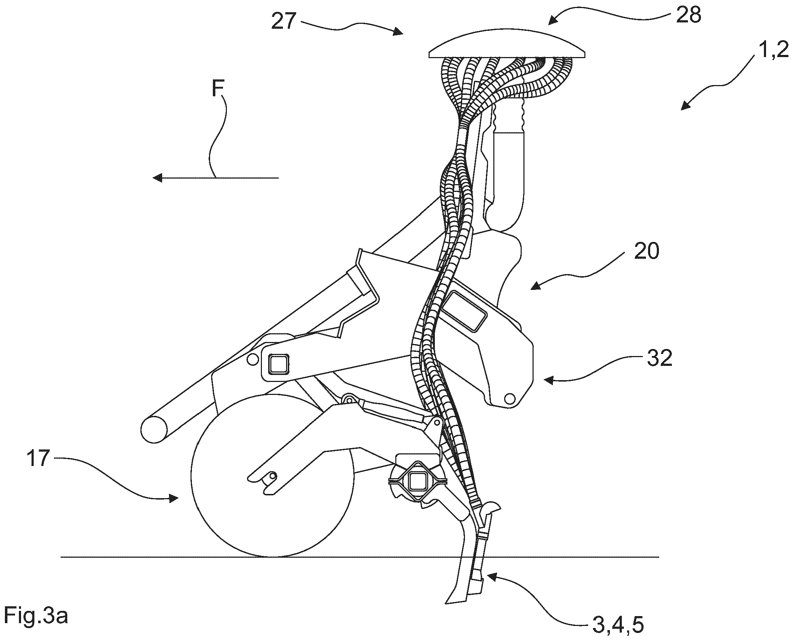

Die Sävorrichtung 2 weist für jeden Tragarm 3 ein Bodenbearbeitungswerkzeug 4 zur Säfurchenerzeugung auf, welches an dem entsprechenden Tragarm 3 austauschbar befestigt ist (vgl. auch Figuren 3a bis 3c).

Das Bodenbearbeitungswerkzeug 4 kann ein Meißelschar oder ein Scharmeißel oder ein Standardmeißel oder ein Zinkenmeißel oder ein Einscheibenschar oder ein Doppelscheibenschar sein, mit welchem eine Säfurche in einem Ackerboden erzeugbar ist. Im vorliegenden Fall wird ein Meißelschar verwendet (siehe auch Figuren 3a bis 3c).

Gemäß den Figuren 1 und 2 sind 16 Tragarme 3 in Reihe nebeneinander und quer zur Arbeitsrichtung F der Sävorrichtung 2 oder des Frontanbaus 1 angeordnet, wobei der Abstand zwischen zwei benachbarten Tragarmen 3 zwischen 100 bis 300 mm stufenlos oder in vorgegebenen Abständen einstellbar ist.

Mithilfe dieser Ausgestaltung ist es nun möglich, bereits in Fahrtrichtung F vor einer Zugmaschine eine Säfurche zu erzeugen, in welche Saatgut und/oder Dünger ablegbar ist. Auf diese Weise kann z. B. bei einem Maschinensystem mit dem Frontanbau 1 und einem Heckanbau an einer Zugmaschine 50 ein Behälter für Saatgut und/oder Dünger am Heck bzw. am Heckanbau geringer dimensioniert werden oder gar entfallen, wodurch eine verbesserte/gleichmäßigere Ballastierung des Maschinensystems erreichbar ist. Auch können durch so einen Aufbau Achslasten der Zugmaschine reduziert bzw. besser verteilt werden. Somit sind von dem Frontanbau 1 für die Ausbringung von Dünger und/oder Saatgut kurze Förderwege realisierbar. Ferner entfällt eine komplizierte Montage von Förderleitungen oder Verteilleitungen zur Führung von Saatgut und/oder Dünger zum Heck einer Zugmaschine.

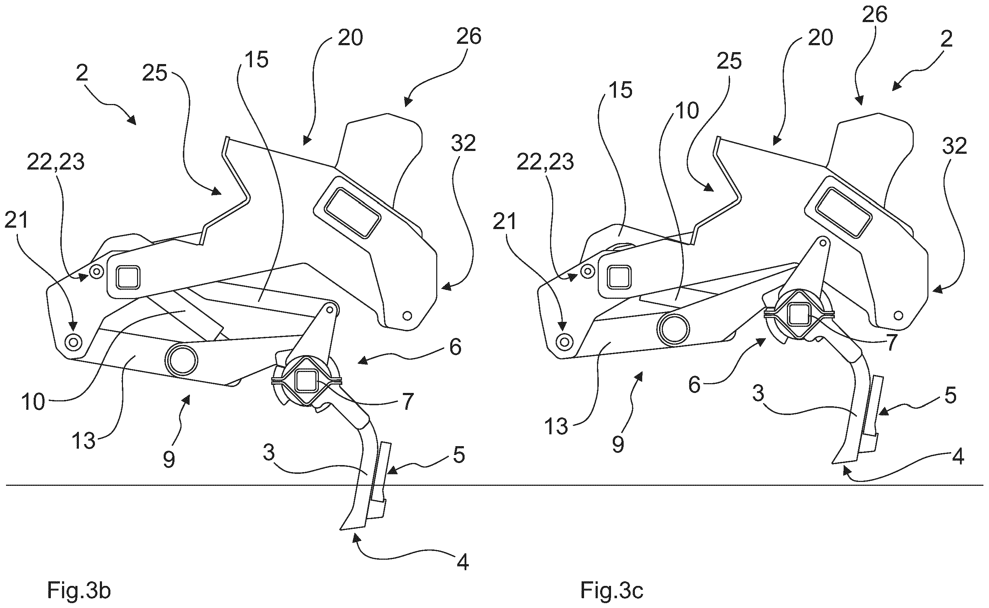

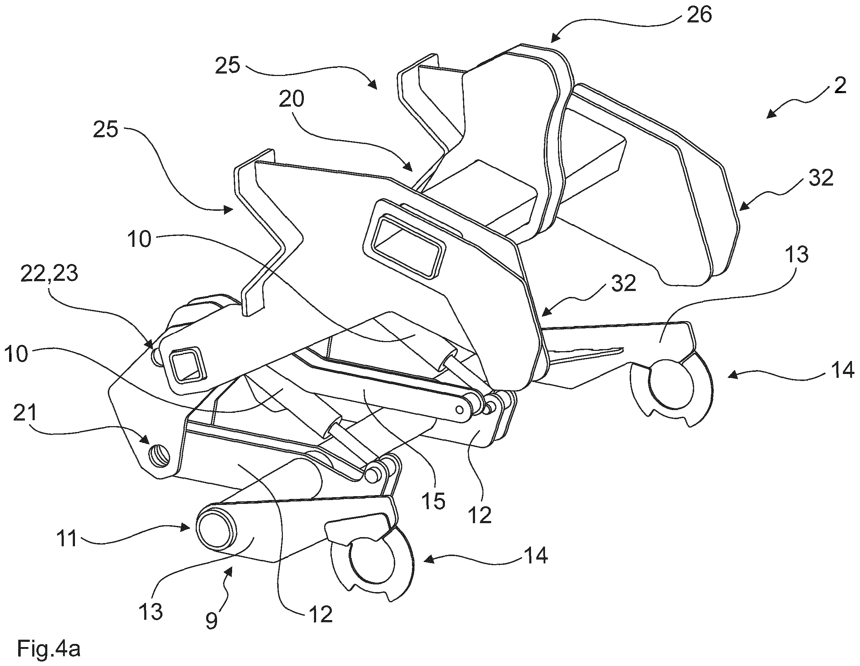

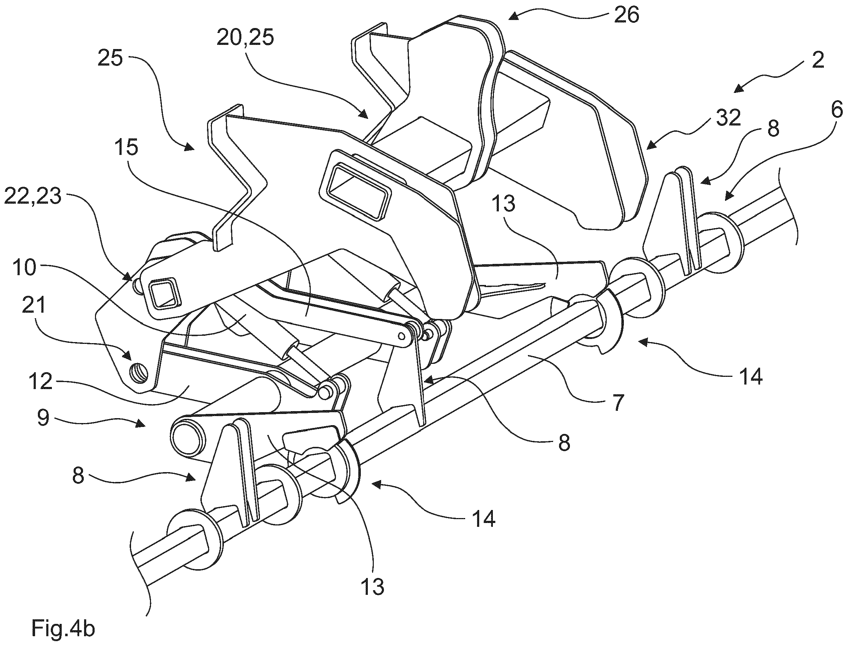

Figuren 3a bis 3c zeigen eine seitliche Ansicht der Sämaschine 2 aus Figuren 1 und 2 mit Schwerpunkt auf eine Hubeinrichtung 9, wohingegen Figuren 4a und 4b eine räumliche Ansicht der Sämaschine 2 aus Figuren 3b und 3c darstellen. Die nachfolgende Beschreibung bezieht sich im Wesentlichen auf die Figuren 3b bis 4b.

Wie in den Figuren 1 und 2 sowie in den Figuren 3a bis 3c erkennbar, hat die Sävorrichtung 2 mehrere Ausbringleitungen 5 für Saatgut und/oder Dünger. Dabei ist - exemplarisch für einen Tragarm 3 erläutert - in Arbeitsrichtung F der Sävorrichtung 2 ein Tragarm 3 vor einer Ausbringleitung 5 angeordnet, sodass eine Ausbringleitung 5 einem Tragarm 3 nachläuft, um Saatgut und/oder Dünger in einen Ackerboden einzubringen. Genauer geschildert ist je eine Ausbringleitung 5 in Arbeitsrichtung F der Sävorrichtung 2 hinter jeweils einem Tragarm 3 angeordnet. Somit kann eine sichere Ablage von Dünger und/oder Saatgut innerhalb einer Säfurche gewährleistet werden.

Des Weiteren zeigen die Figuren 1, 2 sowie 3a bis 3c und auch Figur 4b, dass die Sävorrichtung 2 eine Halteeinrichtung 6 für die Tragarme 3 aufweist. An der Halteeinrichtung 6 sind die Tragarme 3 zum Tragen und Führen eines Bodenbearbeitungswerkzeugs 4 befestigt. Der Vollständigkeit halber sei darauf hingewiesen, dass die Sävorrichtung 2 zwei oder mehr Halteeinrichtungen 6 für Tragarme 3 aufweisen kann, an welchen jeweils Tragarme 3 zum Tragen und Führen eines Bodenbearbeitungswerkzeugs 4 befestigt sein können.

Im vorliegenden Fall bzw. gemäß den Figuren 3b, 3c und 4b weist die Halteeinrichtung 6 ein Rohr 7, z. B. ein Vierkantrohr oder ein Scharrohr, auf.

Ferner hat die Halteeinrichtung 6 drei Stützrahmenteile 8, wobei die äußeren zwei Stützrahmenteile 8 zum Anschluss für je einen Lenker 19 zweier Tiefenführungseinrichtungen 16 der Sävorrichtung 2 und zur räumlichen Führung dienen.

Die Stützrahmenteile 8 sind drehfest mit dem Rohr 7 der Halteeinrichtung 6 verbunden und werden von einem dreiecksförmigen Blech gebildet.

Mithilfe der Stützrahmenteile 8 kann die Drehung bzw. Rotation des Rohrs 7 der Halteeinrichtung 6 im Zusammenspiel mit den Lenkern 19 der Tiefenführungseinrichtungen 16 begrenzt werden. Somit kann also die räumliche Position der Halteeinrichtung 6 bestimmt geführt werden.

Wie bereits erwähnt, zeigen Figuren 3a bis 4b eine Hubeinrichtung 9 der Sävorrichtung 2.

Mit der Hubeinrichtung 9 sind die Tragarme 3 zum Tragen und Führen eines Bodenbearbeitungswerkzeugs 4 von einer Transportstellung in eine Arbeitsstellung und umgekehrt überführbar. Ferner sind mit der Hubeinrichtung 9 Tiefenführungseinrichtungen 16 zur Tiefenführung der Bodenbearbeitungswerkzeuge 4 in einem Ackerboden und als Überlastungsschutz der Bodenbearbeitungswerkzeuge 4 vor Unebenheiten einer Ackeroberfläche von einer Transportstellung in eine Arbeitsstellung und umgekehrt überführbar.

Somit dient die Hubeinrichtung 9 dazu - wenn z. B. der Frontanbau 1 an einer Zugmaschine befestigt ist - die Sävorrichtung 2 bzw. deren Tragarme 3 relativ zur Zugmaschine derart abzulassen, dass die Bodenbearbeitungswerkzeuge 4 in einen Ackerboden eingreifen können. Auch ist es mithilfe der Hubeinrichtung 9 möglich, die Sävorrichtung 2 des Frontanbaus 1 relativ zur Zugmaschine derart hochzuheben, dass die Bodenbearbeitungswerkzeuge 4 von einem Ackerboden beabstandet werden.

Dabei hat die Hubeinrichtung 9 zwei Aktoren 10, mit welchen die Halteeinrichtung 6 der Sävorrichtung 2 bzw. die Tragarme 3 durch ein Ein- und Ausfahren der Stellglieder der Aktoren 10 von einer Transportstellung in eine Arbeitsstellung und umgekehrt überführbar sind.

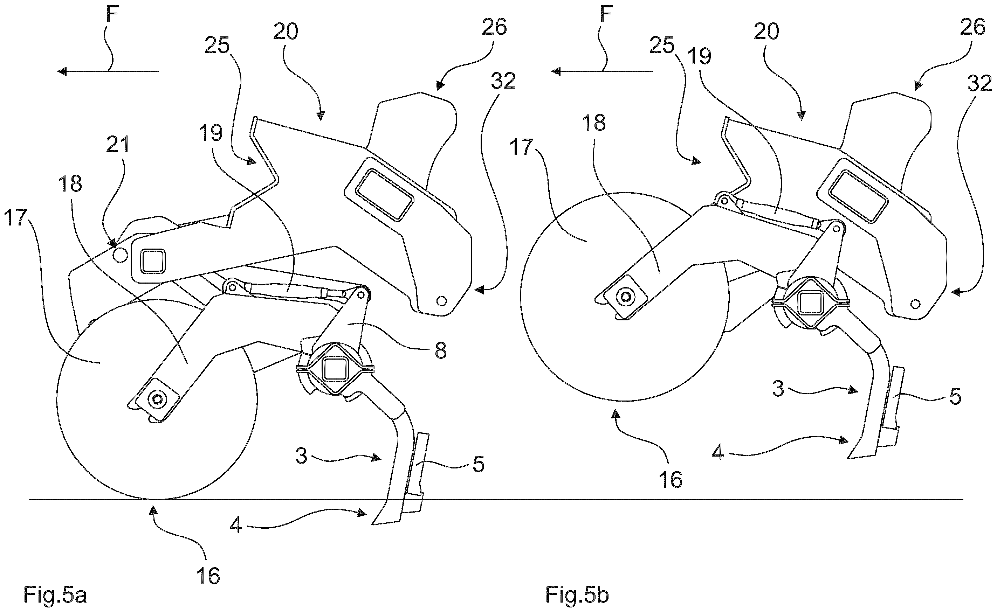

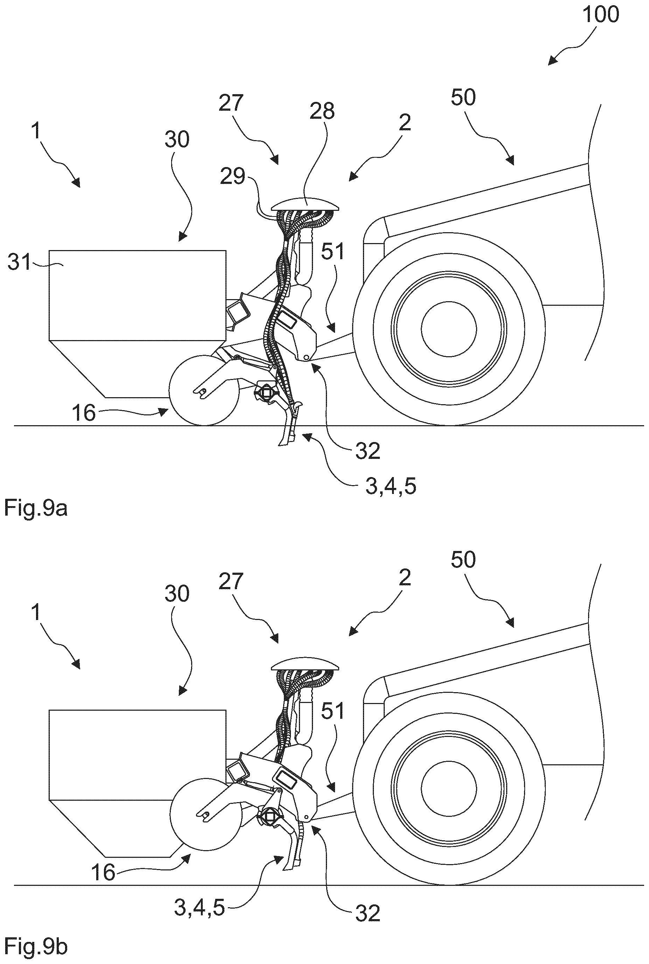

Bei Zusammenschau der Figuren 3b, 3c und 5a, 5b sowie 9a und 9b wird ersichtlich, dass die Sävorrichtung 2 in der Transportstellung der Hubeinrichtung 9 (gezeigt in Figuren 3c, 5b, 9b) auf einer Straße bewegbar ist, sodass eine Säfurchenerzeugung unterbindbar ist. Anders ausgedrückt, sind in Anbringung der Sävorrichtung 2 an einer Zugmaschine 50 in der Transportstellung der Hubeinrichtung 9 die Bodenbearbeitungswerkzeuge 4 von der Erdoberfläche beabstandet (vgl. Figuren 5b, 9b).

Ferner ist unter Bezugnahme auf die Figuren 3b, 3c und 5a, 5b sowie 9a und 9b ersichtlich, dass die Sävorrichtung 2 in der Arbeitsstellung der Hubeinrichtung 9 (gezeigt in Figuren 3b, 5a, 9a) zur Säfurchenerzeugung einsetzbar ist. Mit anderen Worten formuliert, sind in Anbringung der Sävorrichtung 2 an einer Zugmaschine 50 in der Arbeitsstellung der Hubeinrichtung 9 die Bodenbearbeitungswerkzeuge 4 in einem Ackerboden platzierbar (vgl. Figuren 5a, 9a).

Wie in den Figuren 3a bis 4b gezeigt, sind die beiden Aktoren 10 als Hydraulikzylinder ausgebildet. Genau genommen handelt es sich um doppelwirkende Hydraulikzylinder.

Somit kann mit diesen die Arbeits- als auch die Transportstellung der Hubeinrichtung 9 realisiert werden.

Ferner verbindet jeder Aktor 10 bzw. die Hubeinrichtung 9 eine Rahmeneinrichtung 20 der Sävorrichtung 2 beweglich mit der Halteeinrichtung 6 der Sävorrichtung 2. Die Rahmeneinrichtung 20 dient der Befestigung der Sävorrichtung 2 an einer Zugmaschine, wobei mittels der Aktoren 10 bzw. der Hubeinrichtung 9 ein Ablassen und/oder Hochheben der Bodenbearbeitungswerkzeuge 4 bzw. der Tragarme 3 möglich ist.

Dabei umfasst die Hubeinrichtung 9 einen Halterahmen 11 mit zwei Aktorteilen 12 und mit einem Halteteil 13.

Jeder Aktorteil 12 ist an seinem ersten Ende drehbeweglich an einer Rahmeneinrichtung 20 der Sävorrichtung 2 angeordnet. Ferner ist jeder Aktorteil 12 an seinem zweiten Ende an einem Aktor 10 der Hubeinrichtung 9 drehbeweglich angeordnet ist. Dabei sind die Aktorteile 12 als Kragarm ausgebildet bzw. ist jeweils das zweite Ende freikragend ausgebildet.

Des Weiteren ist der Halteteil 13 starr an den Aktorteilen 12, z. B. zwischen deren ersten und zweiten Ende, befestigt, wodurch die Aktorteile zusammen mit dem Halteteil 13 als Einheit bewegt werden können.

Der Halteteil 13 ist U-förmig ausgebildet. Die freien Enden der gleichorientierten Schenkel des Halteteils 13 sind zur Verbindung mit der Halteeinrichtung 6 der Sävorrichtung 2 ausgebildet (vgl. Figuren 4a, 4b). Somit kann also an den freien Enden die Halteeinrichtung 6 angebracht werden, an welcher die Tragarme 3 befestigt sind. Der Schenkel der U-förmigen Ausbildung, der die beiden gleichorientierten Schenkel verbindet, ist mit den Aktorteilen drehfest verbunden.

Zudem weist der Halterahmen 11 zwei Drehlager 14 auf, mit welchen die Halteeinrichtung 6 der Sävorrichtung 2 drehbar am Halterahmen 11 angeordnet ist. Konkret sind die Drehlager 14 an dem Halteteil 13 der Halteeinrichtung 6 angeordnet, wobei die zwei Drehlager 14 an jeweils einem freien Ende eines gleichorientierten Schenkels des U-förmig ausgebildeten Halteteils 13 angeordnet sind.

Wie Figuren 3b bis 4b zeigen, hat die Hubeinrichtung 9 einen Parallellenker 15, mit welchem die Drehbewegung der Halteeinrichtung 6 der Sävorrichtung 2 über die Drehlager 14 relativ zum Halterahmen 11 festgelegt oder begrenzt ist.

Dabei ist der Parallellenker 15 mit seinem ersten Ende drehbeweglich an einer Rahmeneinrichtung 20 der Sävorrichtung 2 und mit seinem zweiten Ende drehbeweglich an einem Stützrahmenteil 8 der Halteeinrichtung 6 angeordnet. Somit verbindet der Parallellenker 15 zwei Bauteile über eine Distanz drehbeweglich miteinander.

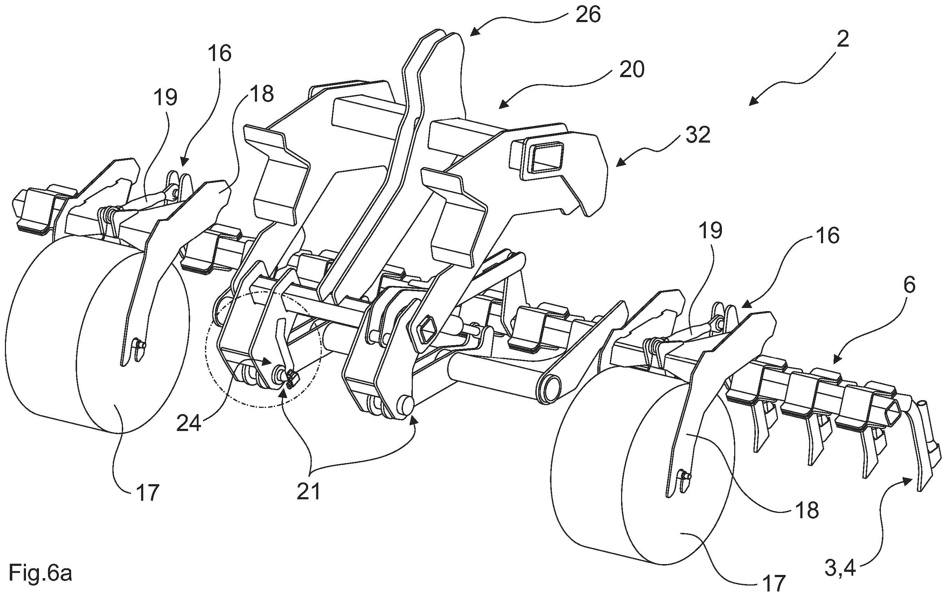

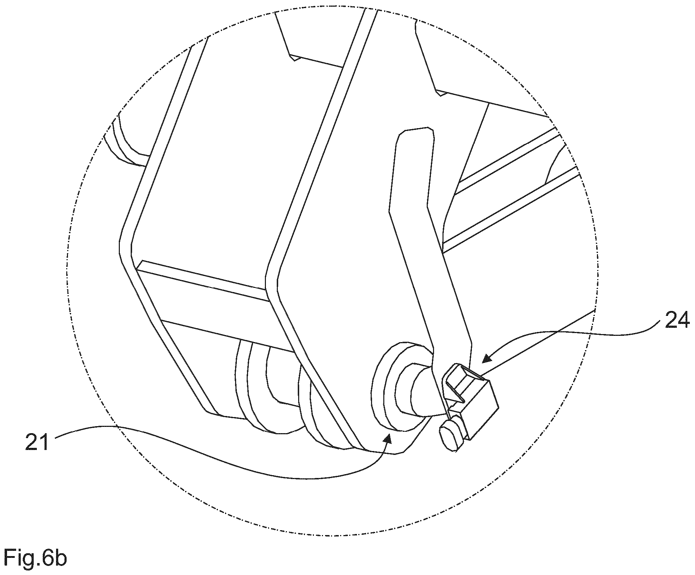

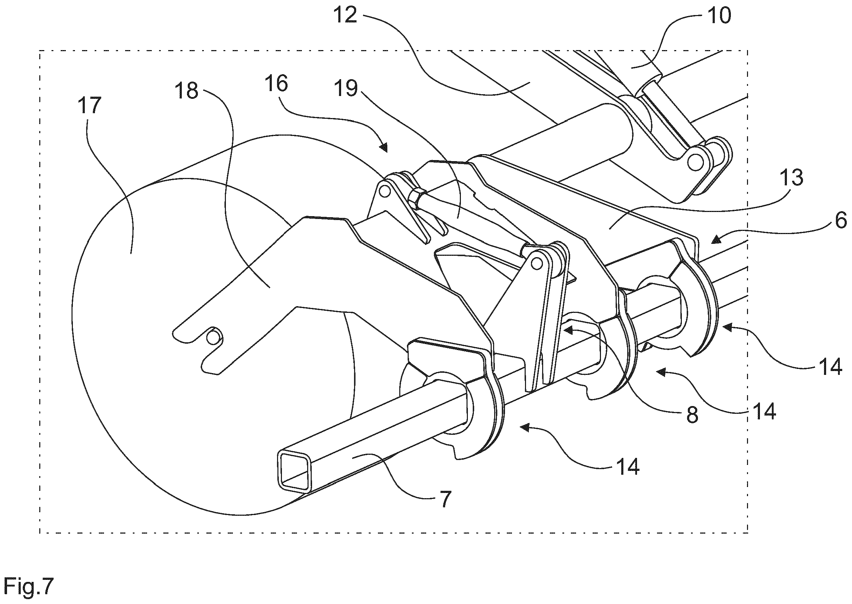

Figuren 5a und 5b zeigen eine seitliche Ansicht der Sämaschine 2 aus Figuren 1 und 2 mit Schwerpunkt auf eine Hubeinrichtung 9 sowie auf eine Tiefenführungseinrichtung 16. Des Weiteren zeigt Figur 6 eine räumliche Ansicht der Sämaschine 2 aus Figuren 1 und 2 mit einem vergrößerten Bereich, wobei Figur 7 eine räumliche Ansicht auf eine Tiefenführungseinrichtung 16 aus Figur 6 darstellt.

Demgemäß zeigen besonders gut die Figuren 5a, 5b und 7, dass die Sävorrichtung 2 zwei Tiefenführungseinrichtungen 16 zur Tiefenführung von Bodenbearbeitungswerkzeugen 4 in einem Ackerboden und als Überlastungsschutz der Bodenbearbeitungswerkzeuge 4 vor Unebenheiten einer Ackeroberfläche umfasst.

Dabei hat jede Tiefenführungseinrichtung 16 ein Stützrad 17 zum Abstützen der Sävorrichtung 2 auf einer Ackerbodenoberfläche oder auf einem Ackerboden. Jedes Stützrad 17 ist drehbar um seine Drehachse ausgebildet. Mithilfe der Stützräder 17 ist z. B. die Arbeitstiefe der Bodenbearbeitungswerkzeug 4 in einem Ackerboden festlegbar.

Ferner ist jedes Stützrad 17 drehbar an der Halteeinrichtung 6 der Sävorrichtung 2 angeordnet, wodurch die relative Position der Bodenbearbeitungswerkzeuge 4 zum Stützrad 17 einstellbar ist. Dadurch sind zudem die Bodenbearbeitungswerkzeuge 4 in einer bestimmbaren Bearbeitungstiefe in einem Ackerboden führbar und die Bearbeitungstiefe der Bodenbearbeitungswerkzeuge 4 in einem Ackerboden einstellbar.

Außerdem hat jede Tiefenführungseinrichtung 16 einen Führ- und Halterahmen 18 zur Führung des zugehörigen Stützrades 17 der Tiefenführungseinrichtung 16.

Jeder Führ- und Halterahmen 18 ist drehbar an der Halteeinrichtung 6 der Sävorrichtung 2 angeordnet. Somit ist die relative Position der Bodenbearbeitungswerkzeuge 4 zum Stützrad 17 der Tiefenführungseinrichtung 16 einstellbar. Ferner ist dadurch die Bearbeitungstiefe der Bodenbearbeitungswerkzeuge 4 in einem Ackerboden einstellbar bzw. sind die Bodenbearbeitungswerkzeuge 4 in einer bestimmbaren Bearbeitungstiefe in einem Ackerboden führbar.

Gemäß den Figuren 6 und 7 hat jede Tiefenführungseinrichtung 16 einen Lenker 19. Der Lenker 19 ist verstellbar ausgebildet, sodass mit diesem die relative Lage des zugehörigen Führ- und Halterahmens 18 der Tiefenführungseinrichtung 16 zur Halteeinrichtung 6 der Sävorrichtung 2 veränderbar und/oder einstellbar ist. Somit ist also die Bearbeitungstiefe der Bodenbearbeitungswerkzeuge 4 in einem Ackerboden einstellbar.

Ferner ist gemäß Figuren 6 und 7 jeder Lenker 19 an einem Stützrahmenteil 8 der Halteinrichtung 6 der Sävorrichtung 2 und an einem Führ- und Halterahmen 18 der Tiefenführungseinrichtung 16 angeordnet, sodass der Führ- und Halterahmen 18 relativ um die Halteeinrichtung 6 verstellbar ist. Dadurch ist - wie schon erwähnt - die Bearbeitungstiefe der Bodenbearbeitungswerkzeuge 4 in einem Ackerboden einstellbar.

Vor diesem Hintergrund kann festgehalten werden, dass die Tiefenführungseinrichtungen 16 in einem Überlastfall, in welchem z. B. die Sävorrichtung 2 zur Säfurchenerzeugung gegen einen großen Widerstand bewegt wird, die Tragarme 3 zum Tragen und Führen der Bodenbearbeitungswerkzeuge 4 vor Beschädigung bewahren kann. Dabei kann der Widerstand z. B. von einem großen Stein oder von Bodenunebenheiten hervorgerufen werden. In diesem Zusammenhang sind die Tiefenführungseinrichtungen 16 so ausgebildet, dass in diesem Überlastfall die Stützräder 17 eine Kraft von dem zu überwindenden Hindernis erfahren. Diese einwirkende Kraft leiten die Tiefenführungseinrichtungen 16 an die Aktoren 10 der Hubeinrichtung 9 weiter.

Aufgrund der Ausgestaltung der Aktoren 10 können die Tragarme 3 zum Tragen und Führen der Bodenbearbeitungswerkzeuge 4 kurzzeitig von ihrer Arbeitsstellung in ihre Transportstellung überführt werden. Somit beabstanden die Tiefenführungseinrichtungen 16 im Überlastfall die Tragarme 3 zum Tragen und Führen der Bodenbearbeitungswerkzeuge 4 von einem Ackerboden, um Schäden an den Tragarmen 3 zu vermeiden. Nachdem das Hindernis überwunden ist, führen die Aktoren 10 die Tragarme 3 bzw. die Halteeinrichtung 6 von der Transportstellung in die Arbeitsstellung zurück.

Wie in den Figuren 3a bis 7 gezeigt und wie in den Figuren 3b und 3c gut zu erkennen, hat die Sävorrichtung 2 eine Rahmeneinrichtung 20 zum Tragen weiterer Einrichtungen und zur Anordnung an einem Frontanschluss 51 einer Zugmaschine 50 und zur Anordnung an einer Behältervorrichtung 30 für Saatgut und/oder Dünger (vgl. auch Figuren 9a, 9b).

Dabei weist die Rahmeneinrichtung 20 zwei erste Drehgelenke 21 auf (vgl. Figuren 6 sowie 3b bis 4b), mit welchen jeweils ein Aktorteil 12 des Halterahmens 11 der Hubeinrichtung 9 der Sävorrichtung 2 drehbeweglich gelagert ist.

Ferner hat die Rahmeneinrichtung 20 zwei zweite Drehgelenke 22, mit welchen jeweils ein Aktor 10 der Hubeinrichtung 9 der Sävorrichtung 2 drehbeweglich gelagert ist.

Zudem hat die Rahmeneinrichtung 20 ein drittes Drehgelenk 23, mit welchem der Parallellenker 15 der Hubeinrichtung 9 drehbeweglich gelagert ist.

Mit Blick auf Figur 6 ist ersichtlich, dass ein zweites und das dritte Drehgelenk 22, 23 als ein einziges bzw. gemeinsames Drehgelenk realisiert ist.

Dabei verbinden die ersten, zweiten und das dritte Drehgelenk 21, 22, 23 die Rahmeneinrichtung 20 und das entsprechende Aktorteil 12 sowie den entsprechenden Aktor 10 und den Parallellenker 15 drehbeweglich miteinander.

Figur 6 zeigt zudem, dass die Sävorrichtung 2 einen Drehsensor 24 aufweist. Der Drehsensor 24 ist an einem ersten Drehgelenk 21 der Rahmeneinrichtung 20 angeordnet, um die Lageposition zwischen einem Aktorteil 12 des Halterahmens 11 der Hubeinrichtung 9 und der Rahmeneinrichtung 20 zu erfassen. Somit kann festgestellt werden, ob sich die Hubeinrichtung 9 bzw. die Sävorrichtung 2 in der Arbeits- oder in der Transportstellung befindet.

Des Weiteren zeigen z. B. die Figuren 4a bis 5b, dass die Rahmeneinrichtung 20 eine Aufnahme 25 für eine Behältervorrichtung 30 für Saatgut und/oder Dünger aufweist.

Ferner hat gemäß z. B. den Figuren 4a bis 5b die Rahmeneinrichtung 20 einen Aufnahmeanschluss 32 zum Anschluss an einen Frontanschluss 51 einer Zugmaschine 50.

Außerdem zeigen genannte Figuren, dass die Rahmeneinrichtung 20 einen Anschluss 26 für eine Verteileinrichtung 27 zum Verteilen von Saatgut und/oder Dünger auf mehrere Verteilleitungen 29 der Sävorrichtung 2 aufweist. Dabei wird die Rahmeneinrichtung 20 von Blechen gebildet.

Gemäß den Figuren 1 und 2 weist die Sävorrichtung 2 eine Verteileinrichtung 27 mit einem Verteilerkopf 28 auf.

Der Verteilerkopf 28 verteilt gleichmäßig mit Druckluft gefördertes Saatgut und/oder Dünger aus einer Behältervorrichtung 30 für Saatgut und/oder Dünger auf mehrere Verteilleitungen 29 der Sävorrichtung 2.

Dabei hat die Sävorrichtung 2 mehrere Verteilleitungen 29, mit welchem Saatgut und/oder Dünger von der Verteileinrichtung 27 zum Verteilen von Saatgut und/oder Dünger der Sävorrichtung hin zu den Ausbringleitungen 5 der Sävorrichtung 2 förderbar und/oder leitbar ist.

Hierbei ist ein erstes Ende jeder Verteilleitung 29 an der Verteileinrichtung 27 der Sävorrichtung 2 und ein zweites Ende jeder Verteilleitung 29 an einer Ausbringleitung 5 der Sävorrichtung 2 angeordnet. Somit ist also jede Verteilleitung 29 in der Lage, Dünger und/oder Saatgut von einem Ende der Verteilleitung 29 zum anderen Ende zu leiten. Durch die Ausgestaltung des Frontanbaus 1 mit einer Sävorrichtung 2 können die Verteilleitungen 29 kurzgehalten werden, wodurch z. B. Kraftstoff für ein Fördergebläse einsparbar ist.

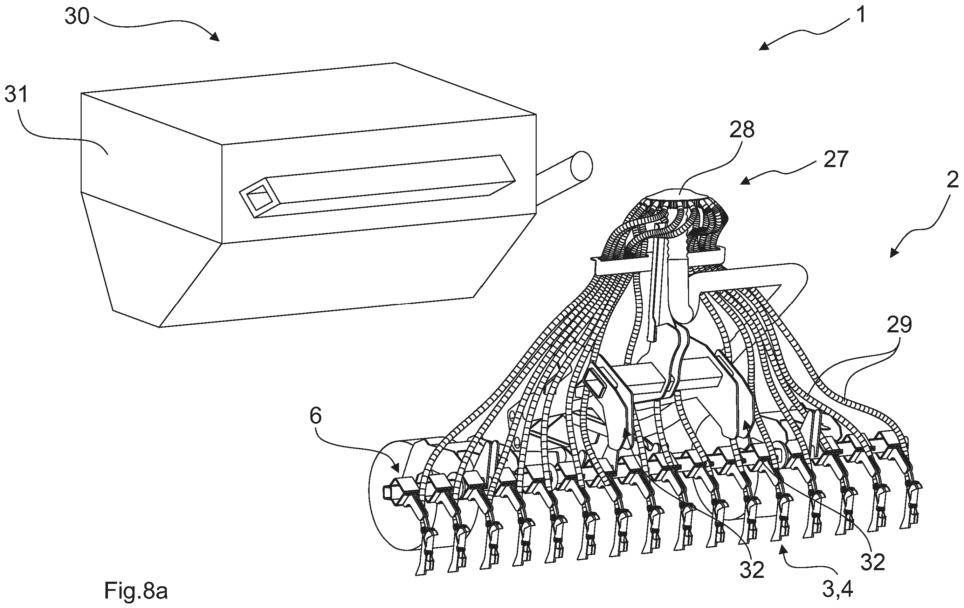

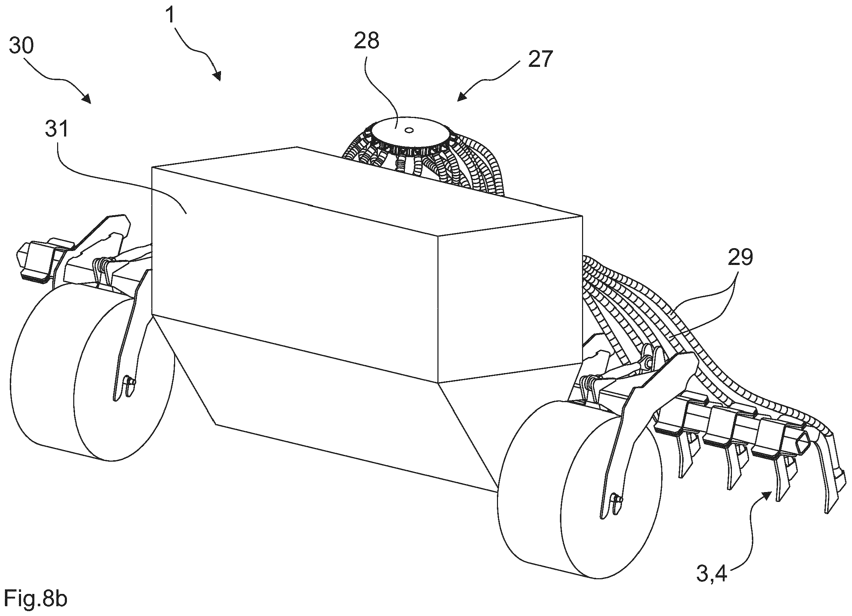

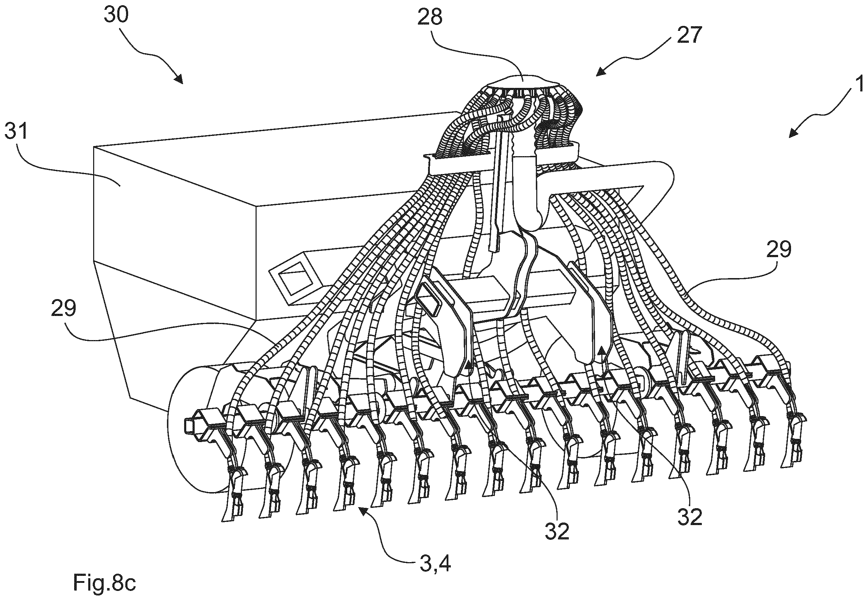

Figuren 8a bis 8c zeigen räumliche Ansichten auf einen Frontanbau 1 mit der Sämaschine 2 aus den vorangehenden Figuren und mit einer Behältervorrichtung 30.

Demgemäß hat also der Frontanbau 1 eine Behältervorrichtung 30 für Saatgut und/oder Dünger, wobei die Behältervorrichtung 30 einen Speicher 31 zum Transport von Saatgut und/oder Dünger aufweist.

Dabei ist die Behältervorrichtung 30 an dem Aufnahmeanschluss 32 der Rahmeneinrichtung 20 der Sävorrichtung 2 angeordnet. Ferner weist die Behältervorrichtung 32 einen Rahmen auf, von welchem der Speicher 31 gestützt wird.

Figuren 9a bis 9b zeigen seitliche Ansichten auf einen Frontanbau 1, angebracht an einer Zugmaschine 50, in unterschiedlichen Zuständen.

Wie in den Figuren 9a und 9b gezeigt, weist ein Maschinensystem 100 zum Einbringen von Saatgut und/oder Dünger in einen Ackerboden einen Frontanbau 1 zum Verbinden mit einem Frontanschluss 51 einer Zugmaschine 50 auf.

Dabei hat der Frontanbau 1 eine Sävorrichtung 2 zur Säfurchenerzeugung. Dadurch ist es nun möglich, bereits in Fahrtrichtung F vor einer Zugmaschine 50 eine Säfurche in einem Ackerboden zu erzeugen, in welche Saatgut und/oder Dünger ablegbar ist. Auf diese Weise kann auch bei einem Maschinensystem 100 mit einem Frontanbau 1 und einem Heckanbau an einer Zugmaschine 50 ein Behälter für Saatgut und/oder Dünger am Heck bzw. am Heckanbau geringer dimensioniert werden oder gar entfallen, wodurch eine verbesserte/gleichmäßigere Ballastierung des Maschinensystems 100 erreichbar ist. Auch können durch so einen Aufbau Achslasten der Zugmaschine 50 reduziert bzw. besser verteilt werden.

Konkret handelt es sich bei dem Frontanbau 1 um einen Frontanbau 1 nach den vorangehenden Figuren.

Des Weiteren zeigen Figuren 9a und 9b, dass das Maschinensystem 100 eine Zugmaschine 50 mit einem Frontanschluss 51 aufweist, wobei der Frontanbau 1 am Frontanschluss angeordnet ist.

Zudem kann das Maschinensystem 100 einen Heckanbau (nicht dargestellt) zum Verbinden mit einem Heckanschluss (nicht dargestellt) der Zugmaschine 50 umfassen, wobei der Heckanbau am Heckanschluss angeordnet ist.

Auch kann der Heckanbau eine Sävorrichtung zur Säfurchenerzeugung aufweisen, wobei die Sävorrichtung des Heckanbaus und die Sävorrichtung 2 des Frontanbaus 1 in Arbeitsrichtung F der Sävorrichtungen 2 oder des Maschinensystems 100 hintereinander angeordnet sind. Somit kann die Sävorrichtung des Heckanbaus der erstellten Säfurche der Sävorrichtung 2 des Frontaufbaus 1 folgen. Folglich kann z. B. vom Frontanbau 1 Saatgut und vom Heckanbau Dünger in derselben Säfurche abgelegt werden. Umgekehrt ist der Vorgang ebenfalls vorstellbar. Es ist aber auch denkbar, dass sowohl vom Frontanbau 1 als auch vom Heckanbau Saatgut und/oder Dünger in derselben oder unterschiedlichen Säfurche abgelegt wird.

Die Sävorrichtung des Heckanbaus und die Sävorrichtung 2 des Frontanbaus 1 können quer zur Arbeitsrichtung F der Sävorrichtungen 1 oder des Maschinensystems 100 versetzt nebeneinander angeordnet sein, sodass die Sävorrichtung des Heckanbaus versetzt zur erstellten Säfurche der Sävorrichtung 2 des Frontaufbaus 2 auf dem Ackerboden anordenbar ist. Somit kann z. B. vom Frontanbau 1 Saatgut und vom Heckanbau Dünger in zueinander benachbarten Säfurchen abgelegt werden. Umgekehrt ist der Vorgang ebenfalls vorstellbar. Es ist auch denkbar, dass sowohl vom Frontanbau 1 als auch vom Heckanbau Saatgut und/oder Dünger abgelegt wird.

Ferner ist es möglich, dass die Sävorrichtung 2 des Frontanbaus 1 ausgebildet ist, Säfurchen in einer ersten Tiefe zu erzeugen, wobei die Sävorrichtung des Heckanbaus ausgebildet ist, Säfurchen in einer zweiten Tiefe zu erzeugen.

Dabei kann die erste und zweite Tiefe gleich sein oder die erste Tiefe geringer sein als die zweite Tiefe oder die zweite Tiefe geringer sein als die erste Tiefe.

**Bezugszeichenliste**

| | | | |
|---|---|---|---|
| 1 | Frontanbau | 21 | erstes Drehgelenk |
| 2 | Sävorrichtung | 22 | zweites Drehgelenk |
| 3 | Tragarm | 23 | drittes Drehgelenk |
| 4 | Bodenbearbeitungswerkzeug | 24 | Drehsensor |
| 5 | Ausbringleitung | 25 | Aufnahme |
| 6 | Halteeinrichtung | 26 | Anschluss |
| 7 | Rohr | 27 | Verteileinrichtung |
| 8 | Stützrahmenteil | 28 | Verteilerkopf |
| 9 | Hubeinrichtung | 29 | Verteilleitung |
| 10 | Aktor | 30 | Behältervorrichtung |
| 11 | Halterahmen | 31 | Speicher |
| 12 | Aktorteil | 32 | Aufnahmeanschluss |
| 13 | Halteteil | | |
| 14 | Drehlager | 50 | Zugmaschine |
| 15 | Parallellenker | 51 | Frontanschluss |
| 16 | Tiefenführungseinrichtung | | |
| 17 | Stützrad | 100 | Maschinensystem |
| 18 | Führ- und Halterahmen | | |
| 19 | Lenker | F | Arbeitsrichtung |
| 20 | Rahmeneinrichtung | | |

## Patentansprüche

1. Frontanbau (1) zum Verbinden mit einem Frontanschluss (51) einer Zugmaschine (50) aufweisend:
- eine Sävorrichtung (2) zur Säfurchenerzeugung mit wenigstens einen Tragarm (3) zum Tragen und Führen eines Bodenbearbeitungswerkzeugs (4).

2. Frontanbau nach Anspruch 1,
- wobei die Sävorrichtung (2) für den wenigstens einen Tragarm (3) ein Bodenbearbeitungswerkzeug (4) zur Säfurchenerzeugung aufweist, welches an dem wenigstens einen Tragarm (3) austauschbar befestigbar ist.

3. Frontanbau nach Anspruch 1 oder 2,
- wobei die Sävorrichtung (2) wenigstens eine Ausbringleitung (5) für Saatgut und/oder Dünger aufweist, und
- wobei in Arbeitsrichtung (F) der Sävorrichtung (2) der wenigstens eine Tragarm (3) vor der wenigstens einen Ausbringleitung (5) angeordnet ist, sodass eine Ausbringleitung (5) einem Tragarm (3) nachläuft, um Saatgut und/oder Dünger in einen Ackerboden einzubringen.

4. Frontanbau nach einem der vorangehenden Ansprüche,
- wobei die Sävorrichtung (2) eine Halteeinrichtung (6) für den wenigstens einen Tragarm (3) umfasst, an welcher der wenigstens eine Tragarm (3) zum Tragen und Führen eines Bodenbearbeitungswerkzeugs (4) befestigbar ist.

5. Frontanbau nach einem der vorangehenden Ansprüche,
- wobei die Sävorrichtung (2) eine Hubeinrichtung (9) aufweist, mit welcher der wenigstens eine Tragarm (3) zum Tragen und Führen eines Bodenbearbeitungswerkzeugs (4) von einer Transportstellung in eine Arbeitsstellung und umgekehrt überführbar ist und/oder mit welcher eine Tiefenführungseinrichtung (16) zur Tiefenführung wenigstens eines Bodenbearbeitungswerkzeugs (4) in einem Ackerboden und als Überlastungsschutz wenigstens eines Bodenbearbeitungswerkzeugs (4) vor Unebenheiten einer Ackeroberfläche von einer Transportstellung in eine Arbeitsstellung und umgekehrt überführbar ist,
- wobei die Hubeinrichtung (9) wenigstens einen Aktor (10) aufweist, mit welchem eine Halteeinrichtung (6) der Sävorrichtung (2) oder der wenigstens einen Tragarm (3) durch ein Ein- und Ausfahren eines Stellgliedes des wenigstens einen Aktors (10) von einer Transportstellung in eine Arbeitsstellung und umgekehrt überführbar ist,
- wobei die Sävorrichtung (2) in der Transportstellung der Hubeinrichtung (9) auf einer Straße bewegbar ist, sodass eine Säfurchenerzeugung unterbindbar ist, und
- wobei die Sävorrichtung (2) in der Arbeitsstellung der Hubeinrichtung (9) zur Säfurchenerzeugung einsetzbar ist.

6. Frontanbau nach Anspruch 5,
- wobei der wenigstens eine Aktor (10) und/oder wobei die Hubeinrichtung (9) eine Rahmeneinrichtung (20) der Sävorrichtung (2) mit einer Halteeinrichtung (6) der Sävorrichtung (2) beweglich verbindet,
und/oder
- wobei die Hubeinrichtung (9) einen Halterahmen (11) mit wenigstens einem Aktorteil (12) und mit einem Halteteil (13) aufweist,
und/oder
- wobei die Hubeinrichtung (9) einen Halterahmen (11) mit wenigstens einem Drehlager (14) aufweist, mit welchem eine Halteeinrichtung (6) der Sävorrichtung (2) drehbar an einem Halterahmen (11) der Hubeinrichtung (9) anordenbar ist.

7. Frontanbau nach einem der vorangehenden Ansprüche,
- wobei die Sävorrichtung (2) wenigstens eine Tiefenführungseinrichtung (16) zur Tiefenführung von wenigstens einem Bodenbearbeitungswerkzeug (4) in einem Ackerboden und als Überlastungsschutz wenigstens eines Bodenbearbeitungswerkzeugs (4) vor Unebenheiten einer Ackeroberfläche umfasst.

8. Frontanbau nach Anspruch 7,
- wobei die wenigstens eine Tiefenführungseinrichtung (16) wenigstens ein Stützrad (17) zum Abstützen der Sävorrichtung (2) auf einer Ackerbodenoberfläche oder auf einem Ackerboden aufweist,
und/oder
- wobei das wenigstens eine Stützrad (17) drehbar an einer Halteeinrichtung (6) der Sävorrichtung (2) angeordnet ist, wodurch die relative Position wenigstens eines Bodenbearbeitungswerkzeugs (4) zum wenigstens einen Stützrad (17) einstellbar ist und/oder wodurch wenigstens ein Bodenbearbeitungswerkzeug (4) in einer bestimmbaren Bearbeitungstiefe in einem Ackerboden führbar und/oder wodurch die Bearbeitungstiefe wenigstens eines Bodenbearbeitungswerkzeugs (4) in einem Ackerboden einstellbar ist.

9. Frontanbau nach Anspruch 7 oder 8,
- wobei die wenigstens eine Tiefenführungseinrichtung (16) einen Lenker (19) umfasst, und
- wobei der Lenker (19) verstellbar ausgebildet ist, sodass mit diesem die relative Lage eines Führ- und Halterahmens (18) der wenigstens einen Tiefenführungseinrichtung (16) zu einer Halteeinrichtung (6) der Sävorrichtung (2) veränderbar und/oder einstellbar ist, sodass die Bearbeitungstiefe wenigstens eines Bodenbearbeitungswerkzeugs (4) in einem Ackerboden einstellbar ist.

10. Frontanbau nach einem der vorangehenden Ansprüche ferner aufweisend:
- eine Behältervorrichtung (30) für Saatgut und/oder Dünger,
- wobei die Behältervorrichtung (30) einen Speicher (31) zum Transport von Saatgut und/oder Dünger aufweist.

11. Maschinensystem (100) zum Einbringen von Saatgut und/oder Dünger in einen Ackerboden aufweisend:
- einen Frontanbau (1) zum Verbinden mit einem Frontanschluss (51) einer Zugmaschine (50),
**dadurch gekennzeichnet, dass**
der Frontanbau (1) eine Sävorrichtung (2) zur Säfurchenerzeugung aufweist.

12. Maschinensystem nach Anspruch 11,
- wobei der Frontanbau (1) ein Frontanbau (1) nach einem der vorangehenden Ansprüche ist.

13. Maschinensystem nach Anspruch 10 oder 11 ferner aufweisend:
- eine Zugmaschine (50) mit einem Frontanschluss (51) und/oder einem Heckanschluss,
- einen Heckanbau zum Verbinden mit einem Heckanschluss einer Zugmaschine (50),
- wobei der Heckanbau eine Sävorrichtung zur Säfurchenerzeugung aufweist,
- wobei die Sävorrichtung des Heckanbaus und die Sävorrichtung (2) des Frontanbaus (1) in Arbeitsrichtung (F) der Sävorrichtungen (2) oder des Maschinensystems (100) hintereinander angeordnet sind, sodass die Sävorrichtung des Heckanbaus der erstellten Säfurche der Sävorrichtung (2) des Frontaufbaus (1) folgt,
oder
- wobei die Sävorrichtung des Heckanbaus und die Sävorrichtung (2) des Frontanbaus (1) quer zur Arbeitsrichtung (F) der Sävorrichtungen (1) oder des Maschinensystems (100) versetzt nebeneinander angeordnet sind, sodass die Sävorrichtung des Heckanbaus versetzt zur erstellten Säfurche der Sävorrichtung (2) des Frontaufbaus (2) auf dem Ackerboden anordenbar ist.

14. Maschinensystem nach einem der vorangehenden Ansprüche,
- wobei die Sävorrichtung (2) des Frontanbaus (1) ausgebildet ist, wenigstens eine Säfurche in einer ersten Tiefe in einem Ackerboden zu erzeugen,
- wobei die Sävorrichtung des Heckanbaus ausgebildet ist, wenigstens eine Säfurche in einer zweiten Tiefe in einem Ackerboden zu erzeugen, und
- wobei die erste und zweite Tiefe gleich sind oder wobei die erste Tiefe geringer ist als die zweite Tiefe oder wobei die zweite Tiefe geringer ist als die erste Tiefe.
